# EUROPEAN PATENT SPECIFICATION

(11) **EP 2 983 096 B1**
(45) Date of publication and mention of the grant of the patent: **03.04.2019**
(21) Application number: 15425060.9
(22) Date of filing: 03.08.2015
(51) Int. Cl.: G06F 17/30, G06Q 30/02

(54) **METHOD FOR THE REAL-TIME AUTOMATIC MODIFICATION ON THE SERVER SIDE OF A WEB PAGE TO THE END OF VISUALIZING A CONTENT SUPERPOSED TO THE WEB PAGE**
VERFAHREN ZUR AUTOMATISCHEN ECHTZEIT-MODIFIKATION AUF DER SERVERSEITE EINER WEBPAGE ZUR VISUALISIERUNG EINES AUF DER WEBPAGE ÜBERLAGERTEN INHALTS
PROCÉDÉ POUR LA MODIFICATION AUTOMATIQUE EN TEMPS RÉEL DU CÔTÉ SERVEUR D'UNE PAGE WEB AFIN DE VISUALISER UN CONTENU SUPERPOSÉ À LA PAGE WEB

(30) Priority: 05.08.2014 IT RM20140458
(43) Date of publication of application: 10.02.2016
(73) Proprietor: Costa, Vittorio, 00151 Roma (IT); Capuano, Vincenzo, 00040 Monte Porzio Catone (RM) (IT); Pierdominici, Emiliano, 00161 Roma (IT)
(72) Inventor: Costa, Vittorio, 00151 Roma (IT); Capuano, Vincenzo, 00040 Monte Porzio Catone (RM) (IT); Pierdominici, Emiliano, 00161 Roma (IT)
(74) Representative: Santi, Filippo

(56) References cited:
- US-A1- 2007 180 147
- US-A1- 2007 256 003
- US-A1- 2008 140 728
- Justin C. Watt: "Hotel Wifi JavaScript Injection", Justinsomnia.org, 3 April 2012 (2012-04-03), pages 1-5, XP055178407, Retrieved from the Internet: URL:http://justinsomnia.org/2012/04/hotel- wifi-javascript-injection/ [retrieved on 2015-03-23]
- Louis Lazaris: "The Z-Index CSS Property: A Comprehensive Look", Smashing Magazine, 15 September 2009 (2009-09-15), pages 1-16, XP055178253, Retrieved from the Internet: URL:http://www.smashingmagazine.com/2009/0 9/15/the-z-index-css-property-a-comprehens ive-look/ [retrieved on 2015-03-20]

## Description

The present invention concerns a method for the real-time automatic modification on the server side of a Web page to the end of visualize a content superposed to the Web page.

More in detail, the present invention concerns a method that is able to insert into any Web page visited by the user by mobile phone, tablet or PC, the HTML and Javascript code allowing the insertion of content such as a (rotatable) icon over a browser and the corresponding code allowing then the opening thereof, showing the corresponding information/advertisement banner.

No products are known to the Inventors, which are able to modify web pages on-the-fly to obtain the visualization of a content superposed onto a web page.

The main problem is the possibility of inserting into any web page visited by the user by mobile phone, tablet or PC, the HTML and Javascript code allowing the insertion of a (rotatable) icon over a browser and the corresponding code allowing then the opening thereof, showing the corresponding information/advertisement banner.

The difficulty is represented in finding automatically and in real-time the most appropriate lines of code of any web page wherein one can insert, in a transparent way and in real-time, the lines of code according to the invention without therefore interfering with the normal functioning of the page.

If the new code was not inserted in the right place, the original Web page could be not visualized correctly any longer or even not visualized at all.

Another technical problem consists in visualizing both the fluctuating icon and the banner or "panel" over all those elements constituting the page and therefore superposing onto the page and appearing always in foreground.

Patent document US 2007/180147 A1 describes a method for the modification of a web page in real time. Such a document teaches to add an advertising banner over the heading of a web page, thus modifying the layout of the original page dividing it into two separate frames wherein an advertising banner is inserted (on the top) in the first and the original page is inserted in the second. Therefore, it deals with an invasive content with respect to the web page, because it modifies its original layout.

Internet publication of Justin C. Watt: "Hotel Wifi JavaScript Injection", Justimsomnia.org, 3 April 2012, 3 April 2002, pages 1-5, XP055178407 discloses on-the-fly modification of a web page by inserting a code after the <head> and <body> strings and putting the z-index to the value of 10.000. However, the inventors of the present application have verified that this does not guarantee the fluctuation of an icon, and/or banner and/or "panel" on the web page, for all the web pages. There is still the need of an automatic method which works for each end every web page. Further details on the differences and effects are given in the detailed description of the present invention.

It is object of the present invention to provide a method solving at least partially the problems of the prior art.

It is subject-matter of the present invention a method and implementation means and devices according to the appended claims.

The invention will be now described by way of illustration but not by way of limitation, with particular reference to the drawings of the annexed figures, wherein:
- Fig. 1 shows a flow chart illustrating an embodiment of the present invention;
- Fig. 2 shows an example of content (icon) superposed according to the invention;
- Fig. 3 shows an example of content obtained by clicking on the icon of Fig. 2;
- Fig. 4 shows a second example of content obtained by clicking on the icon of Fig. 2;
- Fig. 5 shows a network architecture that realizes the method according to the invention.

According to the invention, a server intercepts the Web page requested by a user, executes in real-time the modifications to the page, which are needed to insert the HTML and Java script code according to the invention and gives back the modified page to the user.

The insertion of the code according to the invention in the Web page occurs in an automatic way and follows an intelligent algorithm that individuates the correct sections, which vary from a HTML type to another, wherein the code relevant to the content to superpose is be inserted, without any modification of the original contents of the processed page.

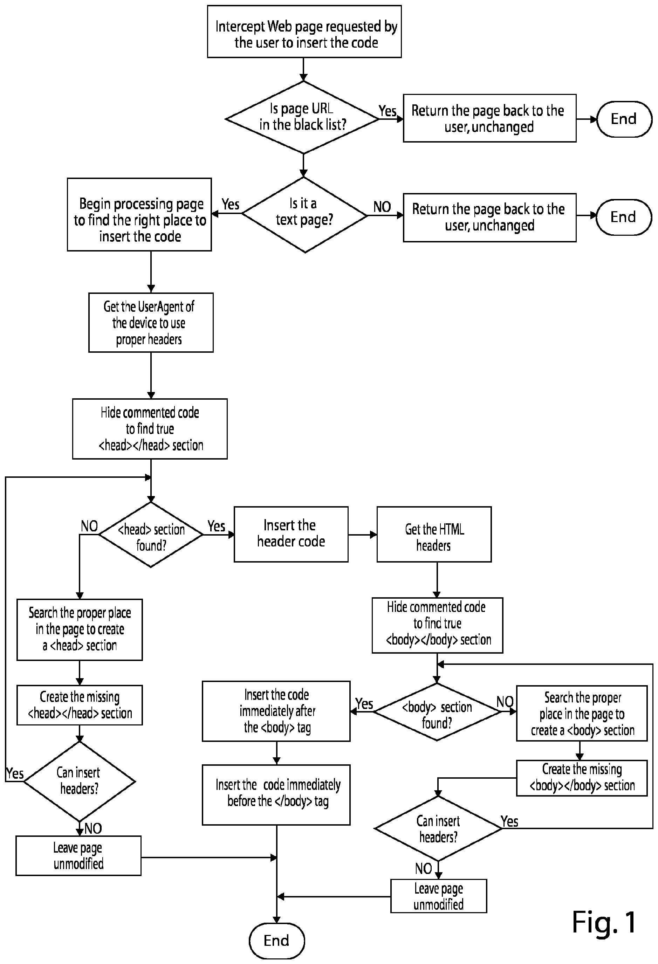

Making reference to Fig. 1, the method verifies that the page is not in a black list, then it proceeds to verify that it does deal with a text page.

Afterwards, the first section that the algorithm seeks is the headers page section individuated by the HTML tag "<head>". At this point, once determined and personalized depending on the UserAgent (https://en.wikipedia.org/wiki/User_agent) of the device so as to modify only requests made by a web browser and not by programs and/or applications, a code with a meta tag HTML is inserted, which defines the zoom ratio by which the page is to be visualized initially; the following HTML code for the default case is for example:
<meta name="viewport" content="width=device-width,initial-scale=0.84,minimum-scale=0.1,maximum-scale=10.0,user-scalable=yes"/>

Application examples for the UserAgent:
- The UserAgent is used to identify the device and, if needed for that particular device, insert particular parameters of <meta> into the <head> for the correct visualization of the content according to the invention.
- The UserAgent is also used to distinguish the traffic of the browser from the traffic of the applications, not to modify the data traffic of an application.

Thereafter, the HTML tag "<body>" is individuated and here one inserts, immediately after the tag, the code (HTML, CSS and Javascript) that defines the geometry of the banner according to the invention, the semi-transparent fluctuating icon, and the modes of opening and visualization of the panel when the fluctuating icon is clicked on. The utilized algorithm solves also the problem of visualizing both the fluctuating icon and the banner/panel always in foreground with respect to the page and therefore leaving the content underneath by using the parameter "z-index" of HTML and assigning to it very high values. In an embodiment, in the case of fluctuating icon, this is realized in semi-transparent mode exactly not to disturb the visualization of the background page, whilst the banner/panel is opaque with respect to the background page because it is activated upon user need.

At the end of the page, the "</body>" tag is identified, wherein instead, immediately before the tag, the Javascript activation code of the content according to the invention.

After having inserted the code according to the invention in the web page, the latter is given back to the user in a transparent way and with a delay practically null with respect to the original page.

The algorithm of insertion of code according to the invention into any page must take into account, in real time, the many different methods of writing of the pages and adapt automatically to any type.

In the following these algorithms are explained in more detail, always with reference to Fig. 1.

There are Web pages that do not have <body> or </body>, as well as <head> or </head>, both by choice of architecture and, more commonly, by error. The method according to the invention needs to use these tags to correctly insert its code in the context of the Web page. Moreover, there are cases wherein in the same page more than one <body> or <head> are present and the algorithm must understand which is the right one. There are moreover cases wherein some tags (<body> or <head>) are part of a comment, and here also the method according to the invention must identify the correct tags and not to select the tags that are part of a comment.

The method according to the invention utilizes adaptive steps that, exactly, "adapt" also to these situations creating the right prerequisite to insert in the correct place in the page. The method, in some cases, corrects automatically the errors in the syntax of the pages, in other cases, more rare, it adds some lines of code in the page to be able to insert itself transparently and without modifying the layout of the original page.

Indeed, in the case of some fundamental tags for the correct use of the invention lacked, as for example the <head> or <body> and </body> tags, the invention seeks automatically the best position to insert them; if the correct position could not be found or there is a risk that the normal functioning of the page is jeopardized, the latter is not modified. There are various cases:
- Lack of <head> and </head>
   ∘ Depending on the page structure, these headers are inserted before the <body> tag if it exists, otherwise just after the <html> tag.
- Lack of <head> but presence of </head>
   ∘ Depending on the page structure, this header is inserted immediately before the </head> tag or just after the <html> tag.
- Lack of <body>
   ∘ It is inserted immediately after the </head> tag.
- Lack of </body>
   ∘ It is inserted immediately before the </html> tag.
- Lack of <body> and </body>
   ∘ They are inserted immediately after </head>
- It is impossible to find a point for the insertion of <head> or <body> or </body>.
   ∘ There are very rare cases wherein because of the lack of these headers, it is preferable not to modify the page. In this case, the web page is sent to the user without modifying it.

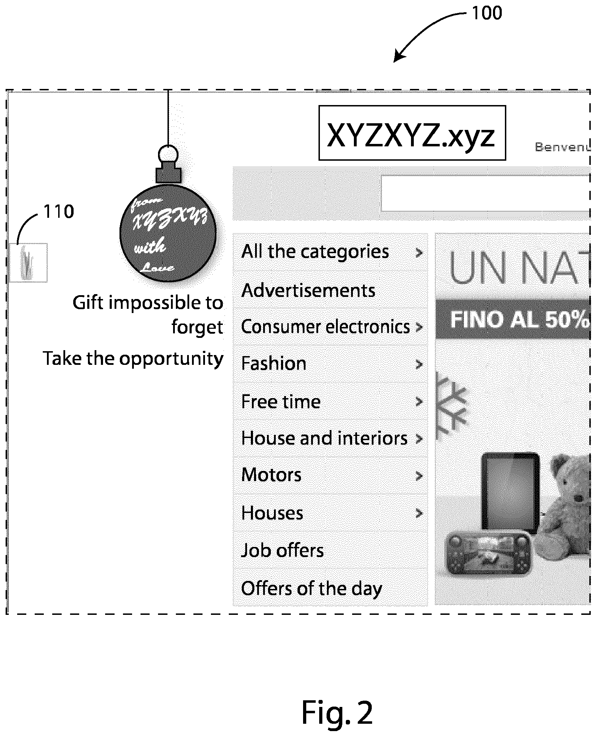

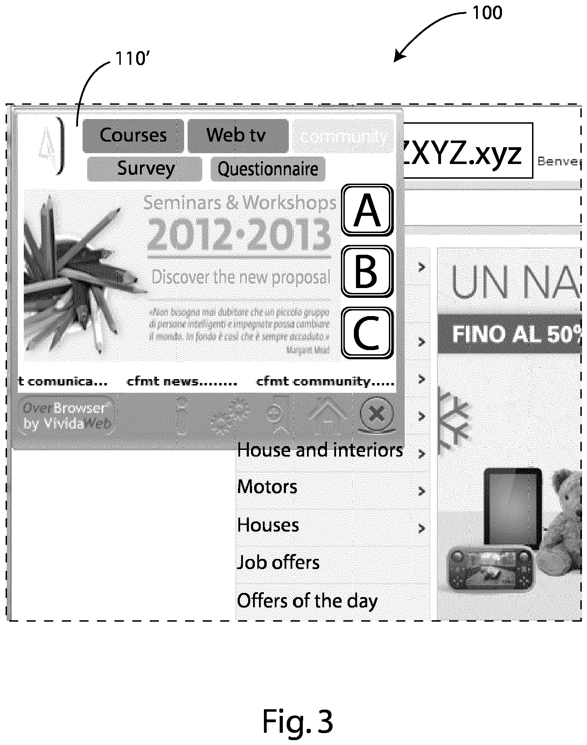

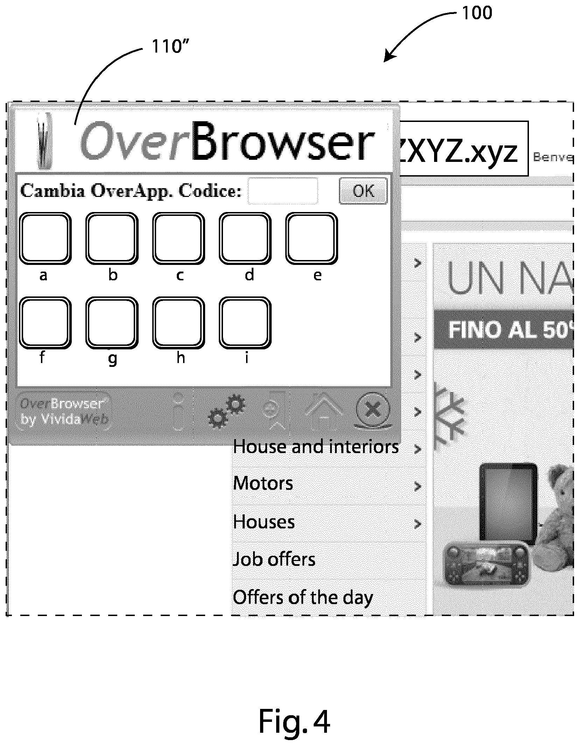

Embodiments of the superposition of contents onto a web page are given in figures 2-4. In figure 2, the superposed icon is that in the left frame. In figure 3 one obtains a banner by clicking on the above mentioned icon, and the same is obtained in a different example of figure 4.

### Step-by-step description of an embodiment of the invention

According to an aspect of the present invention, the invention method is aimed at real-time automatic modifying on the server side of a HTML Web page to the end of visualizing a content superposed to the Web page on a screen of an computer electronic device, in particular a mobile computer device.

The following steps are executed:
A. intercepting a Web page requested by said computer electronic device;
B. searching for strings "<head>" and "</head>" in the code comprised in the Web page of step A, and
   B1. if both strings are present, inserting a header code relevant to said superposed content and placing the HTML "z-index" parameter as defined by W3C at its maximum value;
   B2. if any one of said strings is missing, modifying by automatic editing the HTML page by positioning the missing string "<head>" or "</head>" in the HTML code of the Web page of step A and executing step B1;
C. searching for strings "<body>" and "</body>" in the code of web page of step A or B, and
   C1. if both strings are present, inserting a body code relevant to said superposed content immediately before string "</body>";
   C2. if said string is not present, modifying by automatic editing the HTML page by positioning the missing string "<body>" or "</body>" in the code of the intercepted page and executing step C1;
D. sending to the computer electronic device the web page with the modification of steps B and C;
Wherein if steps B2 or C2 cannot be executed, the Web page of step A is not modified.

According to the invention, the following step:
B0. Hiding all the commented code lines in the code of the web page, to the end of finding a true section "<head>" or "</head>", are executed first in step B.

According to the invention, the following step:
C0. Hiding all the commented code lines in the code of the web page, to the end of finding a true section "<body>" or "</body>", are further executed first in step B.

According to an aspect of the invention, between step A and B, the following steps may be executed:
D. obtaining the User Agent of said computer electronic device;
E. utilizing said User Agent to distinguish the data traffic relevant to a browser and the data traffic relevant to an application, so as to avoid editing according steps B and C the application data.

The invention may be realized by a computer program. Such a computer program comprises code means that, when they are executed by a server, realize the invention method.

The computer program may be stored on a memory medium readable by a computer, having the above computer program stored on it.

The invention may be realized by a server, comprising code means configured to execute the invention method.

The advantages of the solution according to the invention allow :
- The icon:
   ∘ (typically the logo of the Company or telephone company) fluctuates very rapidly.
   ∘ It is not invasive and does not hide the contents of the underlying page (both because it flows rapidly when scrolling the web page and because it is semi-transparent) and is positioned at the edges of the same page.
   ∘ It is movable, in the sense that it is a rotating and twinkling image: the user is attracted by the icon without being disturbed by it.
- The Menu or window ("panel") that appears after the click on the icon:
   ∘ It is esthetically pleasant and designed following 100% the specification of the customer;
   ∘ It flows rapidly during the (vertical or horizontal) scroll of the screen and therefore allows an easy visualization also of the underlying contents;
   ∘ It is composed by two "iframe", i.e. panels that are dynamically fed with suitable editors by the same customer; the solution of the prior art are much more static; and
   ∘ It provides further configurable information (for example amount of data traffic saved tank to the mechanism of data compression that is optional in the product; other examples: find in page; bookmark).
- The system has a high performance and runs in Cloud Computing, by using scalable Open systems of the last generation; it can be also installed and managed within the information network of the customers; and
- The activation of the service in the framework of the mobile networks 2.5G, 3G, 3.5G and 4G (or LTE), can occur both in the standard mode (set up care of the telephone company and/or auto-configuring SMS) and by APPs (iPhone® or Android®); in Wi-Fi, the activation occurs by suitable PUSH mechanisms.

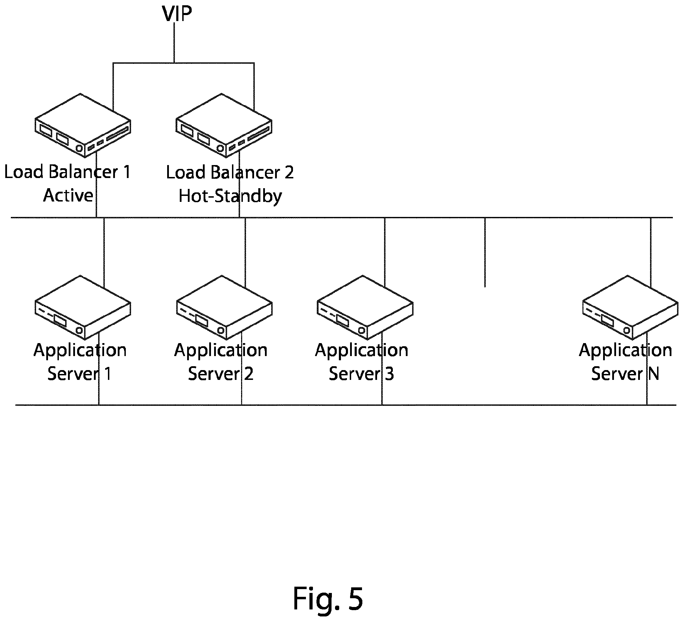

In Fig. 5 a network architecture is shown, which implements the method according to the invention.

In order to access the superposed content according to the invention, the user will have to configure his own device to pass through the proxy containing the content, the configuration can be made manually on the device or automatically and in a way transparent to the user if the latter accedes from the Wi-Fi network or mobile network operator. The user writes on the browser of his PC or mobile device the URL of the Web page he wants to visit, for example "www.ebay.it". The request arrives via Internet to the VIP (Virtual IP) of the load balancer currently active, which routes the request towards one of the application servers wherein the service according to the invention resides. This requests to the Ebay® servers the www.ebay.it and processes it according to the invention method, and then pass it backwards to the user who will receive the requested Web page with the content to be superposed such as a fluctuating icon. If the user pushes the icon, the panel of the multimedia service will open.

With respect to the above mentioned patent document US 2007/180147 A1, the present invention provides a (semi-transparent and fluctuating) content which fluctuates "over" the Web page, in an upper "layer" (in the third dimension), absolutely not modifying the layout of the original web page, but simply adding a three-dimensionality level to the Web page and inserting contents placed within an "iframe" (icon or space superposed to the original Web page, according to the invention) over the page (as explained above, by "over" the z-coordinate is meant, wherefrom the use of the "z-index" comes, which is a CSS property defined in the W3C standard (http://www.w3.org/wiki/CSS/Properties/z-index)). The visualized content fluctuates over the web page and keep always the same position on the screen of the web browser and is therefore always visible even when the page is "scrolled" downwards or upwards, rightwards or leftwards.

Moreover, the method according to the invention allows to insert any type of content in this second layer (being an "iframe") such as images, text, video etc. This content will be always visible even if the page were "scrolled" downwards or upwards, rightwards or leftwards. The concept can be considered analogous to the PIC ("Picture In Picture") of some television sets. Moreover, it can be said that the algorithm of the US application has been thought in two dimension, whilst the invention one is thought in three dimensions.

Most part of the method according to the invention is dedicated to find the right point in the code of the web page to insert the new code (HTML5 + CSS3 + Javascript) because a "standard" web page does not exist and therefore not all the web pages can be modified, at the code level, in the same manner; indeed, a specific command does not exist, which is suitable to find these points and therefore simple codes lines form libraries cannot be used. A new method has instead been created which allows to achieve this goal for the several thousands of situations in the changing coding of the Web pages.

The main goal of the method according to the invention has been that of keeping unaltered the visualization of the hosting web page and not modifying in any way the experience of the user; on the contrary, the algorithm described in US 2007/180147 inserts his code within the "<head>" tag in order to make the wanted code appear before the original web page, therefore shifting the original web page downwards. The invention method, instead, distinguish even what has to be inserted at the beginning of "<body>" and just before the end of body with "</body>", therefore at the beginning and the end of the body, exactly to manage all the possible cases of web pages.

Reverting now on the "z-index", it is commonly used in the composition of web pages and allows to order in a third dimension the elements of a web page and is part of the W3C standard. It serves to visualize a portion of a web page over another portion, such as the "send forward/backward" used in many graphical editors.

The simple use of the z-index as such does not guarantee the "fluctuation" of the additional content over the original web page. In some cases, the user would see his content passing "below" some object of the hosting page.

In order to avoid this problem, a particular configuration of the DOM variables has been performed. The reason is given in the following.
1. The "z-index" can have negative and positive values and its maximum value is that of a 32-bit integer i.e. equal to 2147483647, which is nowadays a standard for almost all the browsers on the market. The invention sets the "z-index" of the iframe to the maximum value supported by the web browsers.
2. Most part of the web sites implements pages with objects that rarely exceed the "z-index" value of 100 or 1000, and therefore the invention "z-index" set to the maximum possible value keeps the objects over all the other elements constituting the hosting web page.
3. There are however limiting cases wherein the hosting web page has some objects with a "z-index" value that is at its maximum value. In such cases, if the content of the hosting web page has the same "z-index" level, the latter prevails. However the method according to the invention "prevents" at the DOM level such a prevalence of the objects of the hosting web page and, in the case there were elements with maximum "z-index", places the creation of the elements constituting the "iframe" in such a way to create it as the last one with respect to all the other elements of the hosting web page; this acts in such a way that the additional object according to the invention comes out to have always a larger priority, even if with the same "z-index", with respect to the elements of the hosting web page and therefore is visualized in any case over all the other objects of the hosting web page.

Inserting the additional elements in such a way the absolutely highest priority with respect to the others means that they must be constructed in the DOM last, and this is performed by placing the additional code exactly before the body closing tag which is "</body>" so as to be sure that there are no other objects to be constructed for the web browser.

Finally, the content that is inserted in the iframe can be exactly the content of a captive portal page; when one exits the captive portal, the content follows the iframe which is inserted in the hosting page.

With respect to the above-cited Internet publication of Justin C. Watt: "Hotel Wifi JavaScript Injection", Justimsomnia.org, 3 April 2012, 3 April 2002, pages 1-5, XP055178407, such a document does not disclose any specific position of the additional code in the DOM. As above stated, the Inventors of the present application have found that a particular position of the additional code, in conjunction with the maximum value of the z-index does allow each and every web page to be automatically modified to visualize a fluctuating icon. In order to exploit these surprising effect, a complete section <> or <> must be present in the page, which is not always the case and is not required in the prior art document. This is why the present invention takes care of directly editing the web page to introduce any missing string without having recourse to any additional code to be executed together with the web page, as in the above document (function "addScript").

In the foregoing, aspects of the invention have been described and variations have been suggested, but it is to be understood that those skilled in the art will be able to change and modify the disclosed invention without so departing from the scope of the enclosed claims.

## Claims

1. Method for the real-time automatic modification on the server side of a HTML Web page to the end of visualizing a content superposed to the Web page on a screen of a computer electronic device, in particular a mobile computer device, **characterized in that** the following steps are executed:
A. intercepting a Web page requested by said computer electronic device;
B. searching for strings "<head>" and "</head>" in the code comprised in the Web page of step A after both:
B0. Hiding all the commented code lines in the code of the web page, to the end of finding a true section "<head>" or "</head>"; and
C0. Hiding all the commented code lines in the code of the web page, to the end of finding a true section "<body>" or "</body>";
B1. if both strings are present, inserting a header code relevant to said superposed content and placing the HTML "z-index" parameter at its maximum possible value;
B2. if any one of said strings is missing, modifying by automatic editing the HTML page by positioning the missing string "<head>" or "</head>" in the HTML code of the Web page of step A and executing step B1;
C. searching for strings "<body>" and "</body>" in the code of web page of step A or B, and
C1. if both strings are present, inserting a body code relevant to said superposed content immediately before string "</body>";
C2. if either or both strings "<body>" and "</body>" is not present, modifying by automatic editing the HTML Web page by positioning the missing string "<body>" or "</body>" in HTML Web page and executing step C1;
wherein modifying by automatic editing in step B2 is such that:
if <head> and </head> are missing, depending on the page structure, these two header tags are inserted before the <body> tag if it exists, otherwise just after the <html> tag;
if <head> is missing, but there is </head>, depending on the page structure, the header tag <HEAD> is inserted immediately before the </head> tag or just after the <html> tag;
and wherein modifying by automatic editing in step C2 is such that: if <body> is missing, said tag is inserted immediately after the </head> tag;
if </body> is missing, said tag is inserted immediately before the </html> tag;
if <body> and </body> are missing, these two tags are inserted immediately after </head>;
otherwise if it is not possible to find a point for the insertion of <head> or <body> or </body>, the web page is not modified;
D. sending to said computer electronic device the web page with the modification of steps B and C;
Wherein if steps B2 or C2 cannot be executed, the Web page of step A is not modified.

2. Method according to claim 1, **characterized in that** between step A and B, the following steps are executed:
D. obtaining the User Agent of said computer electronic device;
E. utilizing said User Agent to distinguish the data relevant to a browser and the data relevant to an application, so as to avoid editing, according steps B and C, the data relevant to a different application.

3. Computer program, **characterized in that** it comprises code means that, when they are executed by a server cause said server to perform the method according to any claim 1 to 2.

4. Memory medium readable by a computer, having a computer program stored on it, **characterized in that** said computer program is the computer program according to claim 3.

5. Server, comprising code executing means configured to perform the method according to any claim 1 to 2.

## Patentansprüche

1. Verfahren zur automatischen Echtzeit-Modifikation auf der Serverseite einer HTML-Webpage zur Visualisierung eines auf der Webpage überlagerten Inhalts auf einem Bildschirm eine elektronischen Computervorrichtung, insbesondere einer mobilen Computervorrichtung, **dadurch gekennzeichnet, dass** die folgenden Schritte ausgeführt werden:
A. Abfangen einer von der elektronischen Computervorrichtung angeforderten Webseite;
B. Suchen nach Zeichenketten "<head>" und "</head>" in dem in der Webseite von Schritt A enthaltenen Code nach beidem:
BO. Verbergen aller kommentierter Codezeilen im Code der Webseite zum Finden eines echten Bereichs "<head>" oder "</head>"; und
CO. Verbergen aller kommentierter Codezeilen im Code der Webseite zum Finden eines echten Bereichs "<body>" oder "</body>";
B1. wenn beide Zeichenketten vorhanden sind, Einfügen eines Kopfzeilencodes, der für den überlagerten Inhalt relevant ist, und Setzen des HTML-Parameters "z-index" auf den maximal möglichen Wert;
B2. wenn eine der Zeichenketten fehlt, Verändern durch automatische Bearbeitung der HTML-Seite durch Positionieren der fehlenden Zeichenkette "<head>" oder "</head>" in den HTML-Code der Webseite von Schritt A und Ausführen von Schritt B1;
C. Suchen nach Zeichenketten "<body>" und "</body>" im Code der Webseite von Schritt A oder B, und
C1. wenn beide Zeichenketten vorhanden sind, Einfügen eines Körpercodes, der für den überlagerten Inhalt relevant ist, unmittelbar vor der Zeichenkette "</body>";
C2. wenn eine oder beide Zeichenketten "<body>" und "</body>" nicht vorhanden ist, Verändern durch automatische Bearbeitung der HTML-Webseite durch Positionieren der fehlenden Zeichenkette "<body>" oder "</body>" auf der HTML-Webseite und Ausführen von Schritt C1;
wobei das Verändern durch automatische Bearbeitung in Schritt B2 so ist, dass:
wenn <head> und </head> fehlen, anhängig von der Seitenstruktur diese beiden Kopfzeilenkennzeichnungen vor der Kennzeichnung <body> eingefügt werden, wenn sie existiert, anderenfalls nach der Kennzeichnung <html>;
wenn <head> fehlt, aber </head> vorhanden ist, anhängig von der Seitenstruktur die Kopfzeilenkennzeichnung <HEAD> unmittelbar vor der Kennzeichnung </head> oder direkt nach der Kennzeichnung <html> eingefügt wird;
und wobei das Verändern durch automatische Bearbeitung in Schritt C2 so ist, dass:
wenn <body> fehlt, die Kennzeichnung unmittelbar nach der Kennzeichnung </head> eingefügt wird;
wenn </body> fehlt, die Kennzeichnung unmittelbar nach der Kennzeichnung der Kennzeichnung </html> eingefügt wird;
wenn <body> und </body> fehlen, diese zwei Kennzeichnungen unmittelbar nach </head> eingefügt werden;
anderenfalls, wenn es nicht möglich ist, eine Stelle für das Einfügen von <head> oder <body> oder </body> zu finden, wird die Webseite nicht verändert;
D. Senden der Webseite mit der Änderung der Schritte B und C an die elektronische Computervorrichtung;
wobei, wenn die Schritte B2 oder C2 nicht ausgeführt werden können, die Webseite von Schritt A nicht verändert wird.

2. Verfahren nach Anspruch 1, **dadurch gekennzeichnet, dass** zwischen Schritt A und B folgende Schritte ausgeführt werden:
D. Erhalten des Benutzeragenten der elektronischen Computervorrichtung;
E. Verwendung des Benutzeragenten, um die Daten zu unterscheiden, die für einen Browser relevant sind, und die Daten, die für eine Anwendung relevant sind, um das Bearbeiten von Daten, die für eine unterschiedliche Anwendung relevant sind, nach Schritten B und C zu verhindern.

3. Computerprogramm, **dadurch gekennzeichnet, dass** es Codemittel umfasst, die, wenn sie von einem Server ausgeführt werden, verursachen, dass der Server das Verfahren nach einem der Ansprüche 1 bis 2 durchführt.

4. Von einem Computer lesbares Speichermittel, auf dem ein Computerprogramm gespeichert ist, **dadurch gekennzeichnet, dass** das Computerprogramm das Computerprogramm nach Anspruch 3 ist.

5. Server, umfassend Mittel zum Ausführen von Codes, der konfiguriert ist, um das Verfahren nach einem der Ansprüche 1 bis 2 durchzuführen.

## Revendications

1. Procédé de modification automatique en temps réel du côté serveur d'une page web HTML afin de visualiser un contenu superposé à la page web sur un écran d'un dispositif électronique d'ordinateur, en particulier un dispositif informatique mobile, **caractérisé en ce que** les étapes suivantes sont exécutées :
A. interception d'une page web requise par ledit dispositif électronique d'ordinateur ;
B. recherche de chaînes « <tête> » et « </tête> » dans le code compris dans la page web de l'étape A après à la fois :
B0. le masquage de toutes les lignes de code commentées dans le code de la page web afin de trouver une véritable section « <tête> » ou « </tête> » ; et
C0. le masquage de toutes les lignes de code commentées dans le code de la page web afin de trouver une véritable section « <corps> » ou « </corps> » ;
B1. si les deux chaînes sont présentes, l'insertion d'un code d'en-tête relatif audit contenu superposé et la mise en place du paramètre « indice z » HTML à sa valeur la plus grande possible ;
B2. si l'une quelconque desdites chaînes est manquante, la modification par édition automatique de la page HTML par positionnement de la chaîne manquante « <tête> » ou « </tête> » dans le code HTML de la page web de l'étape A et l'exécution de l'étape B1 ;
C. recherche des chaînes « <corps> » et « </corps> » dans le code de la page web de l'étape A ou B, et
C1. si les deux chaînes sont présentes, l'insertion d'un code de corps relatif audit contenu superposé immédiatement avant la chaîne « </corps> » ;
C2. si l'une et/ou l'autre des chaînes « <corps> » et « </corps> » n'est ou ne sont pas présentes, la modification par édition automatique de la page web HTML en positionnant la chaîne manquante « <corps> » ou « </corps> » dans la page web HTML et l'exécution de l'étape C1 ;
dans lequel la modification par édition automatique à l'étape B2 est telle que :
si <tête> et </tête> sont manquantes, en fonction de la structure de la page, ces deux marques d'en-têtes soient insérées avant la marque <corps>, si elle existe, autrement juste après la marque <html> ;
que, si <tête> est manquante, mais qu'il y a </tête>, en fonction de la structure de la page, la marque d'en-tête <tête> soit insérée immédiatement avant la marque </tête> ou juste après la marque <html> ; et
dans lequel la modification par édition automatique à l'étape C2 est telle que :
si <corps> est manquante, ladite marque soit insérée immédiatement après la marque </tête> ;
que, si </corps> est manquante, ladite marque soit insérée immédiatement avant la marque </html> ;
que, si <corps> et </corps> sont manquantes, ces deux marques soient insérées immédiatement après </tête> ;
qu'autrement, s'il n'est pas possible de trouver un point pour l'insertion de <tête> ou <corps> ou </corps>, la page web ne soit pas modifiée ;
D. envoi audit dispositif électronique d'ordinateur de la page web avec la modification des étapes B et C ;
dans lequel, si les étapes B2 ou C2 ne peuvent être exécutées, la page web de l'étape A n'est pas modifiée.

2. Procédé selon la revendication 1, **caractérisé en ce que** les étapes suivantes sont exécutées entre les étapes A et B :
D. obtention de l'agent d'utilisateur dudit dispositif électronique d'ordinateur ;
E. utilisation dudit agent d'utilisateur pour distinguer les données relatives à un navigateur et les données relatives à une application de manière à éviter une édition selon les étapes B et C, des données relatives à une application différente.

3. Programme d'ordinateur, **caractérisé en ce qu'**il comprend des moyens de codage qui, lorsqu'ils sont exécutés par un serveur, amènent ledit serveur à effectuer le procédé selon l'une quelconque des revendications 1 à 2.

4. Support de mémoire lisible par un ordinateur, ayant un programme d'ordinateur qui y est stocké, **caractérisé en ce que** ledit programme d'ordinateur est le programme d'ordinateur selon la revendication 3.

5. Serveur comprenant des moyens d'exécution de code configurés pour effectuer le procédé selon l'une quelconque des revendications 1 à 2.
